(19) Europäisches Patentamt
European Patent Office
Office européen des brevets

(11) **EP 4 354 687 A1**

(12) **EUROPEAN PATENT APPLICATION**
published in accordance with Art. 153(4) EPC

(43) Date of publication:
**17.04.2024 Bulletin 2024/16**

(21) Application number: **22890165.8**

(22) Date of filing: **16.09.2022**

(51) International Patent Classification (IPC):
**H02J 3/32** (2006.01)     **H02J 7/00** (2006.01)

(52) Cooperative Patent Classification (CPC):
**H02J 3/32; H02J 7/00**

(86) International application number:
**PCT/KR2022/013855**

(87) International publication number:
**WO 2023/080429 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.11.2021 KR 20210150947**

(71) Applicant: **LG ENERGY SOLUTION, LTD.**
**Seoul 07335 (KR)**

(72) Inventor: **CHO, Jae Sung**
**Daejeon 34122 (KR)**

(74) Representative: **Plasseraud IP**
**66, rue de la Chaussée d'Antin**
**75440 Paris Cedex 09 (FR)**

(54) **METHOD AND DEVICE FOR GENERATING POWER PATTERN**

(57) A power pattern generation method of an energy storage system (ESS) according to an embodiment disclosed herein includes generating a charge/discharge pattern of the ESS based on a normal distribution in consideration of a maximum c-rate and a time step of a unit charge/discharge operation, classifying the charge/discharge pattern into a charge pattern and a discharge pattern, extracting a power value from the charge pattern or the discharge pattern based on a random first value for generating a virtual charge/discharge pattern of the ESS, and generating a power pattern based on the power value.

FIG.1

EP 4 354 687 A1

**Description**

**[TECHNICAL FIELD]**

CROSS-REFERENCE TO RELATED APPLICATION

This application claims priority to and the benefit of Korean Patent Application No. 10-2021-0150947 filed in the Korean Intellectual Property Office on November 4, 2021, the entire contents of which are incorporated herein by reference.

TECHNICAL FIELD

Embodiments disclosed herein relate to a power pattern generation method and apparatus.

**[BACKGROUND ART]**

Renewable energy refers to energy using renewable fuels, including sunlight, water, precipitation, biological organisms, etc., rather than fossil fuels such as coal, oil, nuclear power, natural gas, etc. Types of renewable energy include solar energy, bio-energy, wind power, hydropower, hydrogen energy, and so forth.

An energy storage system (ESS), which links a renewable energy generation system represented by solar power with an electric power storage system, is a system that stores renewable energy or surplus power of a power system in a battery capable of charging and discharging power and supplies a power to a load when necessary. In general, a renewable energy generation system-linked energy storage system charges a battery with renewable energy or system power, and supplies the power to the load through any one of renewable energy, a system, and a battery when the power supply to the load is required.

Generally, the domestic standard power is supplied with an alternating current of 60 Hz. The ESS charges and/or discharges the power thereof to maintain the frequency of the power system changing in real time as 60 Hz.

**[DISCLOSURE]**

**[TECHNICAL PROBLEM]**

In designing of an ESS, in estimation of a lifespan, the designing is carried out without considering a power charge pattern and a power discharge pattern of the ESS, or the designing is performed assuming random power charge pattern and power discharge pattern.

When the designing of the ESS is carried out without considering the power charge pattern and power discharge pattern of the ESS, there are difficulties in calculating a temperature to be applied to the designing. When the designing of the ESS is performed assuming the random power charge pattern and power discharge pattern, a pattern different from a range required by a user may be used.

To more accurately estimate the lifespan of the ESS, it is necessary to create power charging and power discharge patterns in the range required by the user.

In the background art and the technical problems, the matters described as the background art are merely for facilitating understanding of the background of the present invention, and should not be accepted as acknowledging that they correspond to the prior art known to those of ordinary skill in the art.

**[TECHNICAL SOLUTION]**

A power pattern generation method of an energy storage system (ESS) according to an embodiment disclosed herein includes generating a charge/discharge pattern of the ESS based on a normal distribution in consideration of a maximum c-rate and a time step of a unit charge/discharge operation, classifying the charge/discharge pattern into a charge pattern and a discharge pattern, extracting a power value from the charge pattern or the discharge pattern based on a random first value for generating a virtual charge/discharge pattern of the ESS, and generating a power pattern based on the power value.

According to an embodiment, the power pattern generation method of the ESS may further include adjusting some of charge values of the charge pattern or discharge values of the discharge pattern in a range that satisfies an equivalent cycle of the ESS.

According to an embodiment, the power pattern generation method of the ESS may further include calculating a charge/discharge amount based on the power value and generating state of charge (SoC) information based on the charge/discharge amount.

According to an embodiment, the power pattern generation method of the ESS may further include generating a first charge pattern and a second charge pattern based on the charge pattern and generating a first discharge pattern and a second discharge pattern based on the discharge pattern, in which the extracting of the power value includes extracting the power value from any one of the first charge pattern, the second charge pattern, the first discharge pattern, and the second discharge pattern, based on the first value and a random second value for generating the virtual charge/discharge pattern of the ESS.

According to an embodiment, the power pattern generation method of the ESS may further include generating a first group and a second group in consideration of proportions of positive values and negative values, in which the second value is selected from the first group or the second group.

According to an embodiment, the power pattern generation method of the ESS may further include, when a depth of discharge obtained from the SoC information is equal to or greater than a reference value, extracting the power value based on the first value and the second value, generating the power pattern based on the power value, calculating the charge/discharge amount based on the power value, and repeating the generating of the SoC information based on the charge/discharge amount.

According to an embodiment, the power pattern generation method of the ESS may further include, when the depth of discharge obtained from the SoC information is equal to or greater than the reference value and the repeating is performed over a reference iteration count, adjusting the proportions of the positive values and the negative values included in the first group and the second group.

A power pattern generation apparatus of an energy storage system (ESS) according to an embodiment disclosed herein includes a memory configured to store at least one command, a processor configured to execute the at least one command stored in the memory, and an output unit configured to output a result of the execution of the processor, in which the processor is further configured to generate a charge/discharge pattern of an energy storage system (ESS) based on a normal distribution in consideration of a maximum c-rate and a time step of a unit charge/discharge operation, classify the charge/discharge pattern into a charge pattern and a discharge pattern, extract a power value from the charge pattern or the discharge pattern based on a random first value for generate a virtual charge/discharge pattern of the ESS, and generate a power pattern based on the power value.

According to an embodiment, the processor of the power pattern generation apparatus of the ESS may be further configured to adjust some of charge values of the charge pattern or discharge values of the discharge pattern in a range that satisfies an equivalent cycle of the ESS.

According to an embodiment, the processor of the power pattern generation apparatus of the ESS may be further configured to calculate a charge/discharge amount based on the power value and generate state of charge (SoC) information based on the charge/discharge amount.

According to an embodiment, the processor of the power pattern generation apparatus of the ESS may be further configured to generate a first charge pattern and a second charge pattern based on the charge pattern and generating a first discharge pattern and a second discharge pattern based on the discharge pattern, in which the extraction of the power value by the processor includes extracting the power value from any one of the first charge pattern, the second charge pattern, the first discharge pattern, and the second discharge pattern, based on the first value and a random second value for generating the virtual charge/discharge pattern of the ESS.

According to an embodiment, the processor of the power pattern generation apparatus of the ESS may be further configured to generate a first group and a second group in consideration of proportions of positive values and negative values, and the second value may be selected from the first group or the second group.

According to an embodiment, the processor of the power pattern generation apparatus of the ESS may be further configured to, when a depth of discharge obtained from the SoC information is equal to or greater than a reference value, extract the power value based on the first value and the second value, generating the power pattern based on the power value, calculating the charge/discharge amount based on the power value, and repeating the generating of the SoC information based on the charge/discharge amount.

According to an embodiment, the processor of the power pattern generation apparatus of the ESS may be further configured to, when the depth of discharge obtained from the SoC information is equal to or greater than the reference value and the repeating is performed over a reference iteration count, adjust the proportions of the positive values and the negative values included in the first group and the second group.

**[ADVANTAGEOUS EFFECTS]**

A power pattern generation method of an energy storage system (ESS) according to the disclosure of the present document may generate a power charge pattern and a power discharge pattern in a range required by a user.

Based on a power charge pattern and a power discharge pattern generated by the power pattern generation method of the ESS according to the disclosure of the present document, the designing may be performed by relatively accurately estimating the lifespan of the ESS.

**[DESCRIPTION OF DRAWINGS]**

FIG. 1 is a block diagram showing a power generation system, an energy storage system (ESS), a power pattern generation apparatus, and a user, according to an embodiment disclosed herein.

FIG. 2 is a flowchart showing a power pattern generation method according to an embodiment disclosed herein.

FIG. 3 is a flowchart showing in detail a power pattern generation method according to an embodiment disclosed herein.

FIG. 4 is a flowchart showing a power pattern generation method according to an embodiment disclosed herein.

FIG. 5 is a flowchart showing a power pattern generation method according to an embodiment disclosed herein.

With regard to the description of the drawings, similar reference numerals may be used to refer to similar or related components.

**[MODE FOR INVENTION]**

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st", "2nd," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

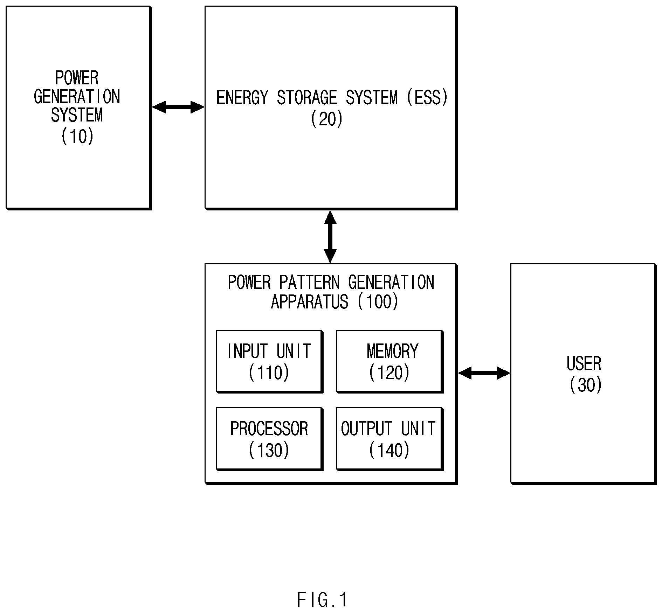

FIG. 1 is a block diagram showing a power generation system, an energy storage system (ESS), a power pattern generation apparatus, and a user, according to an embodiment disclosed herein.

Referring to FIG. 1, a power generation system 10 may generate a power. For example, the power generation system 10 may generate a power based on renewable energy, but may not be limited thereto.

The ESS 20 may operate in conjunction with the power generation system 10. According to an embodiment, the ESS 20 may discharge a stored power when a power less than a predetermined threshold is generated from the power generation system 10. According to another embodiment, when a power greater than or equal to the predetermined threshold is generated from the power generation system 10, the ESS 20 may charge the generated power greater than or equal to the threshold in the ESS 20.

A power pattern generation apparatus 100 may generate a virtual power pattern of the ESS 20. A power pattern may include a power charge pattern and a power discharge pattern. The power pattern generation apparatus 100 may generate virtual power charge pattern and power discharge pattern of the ESS 20, which are similar with actual power charge pattern and power discharge pattern of the ESS 20. The virtual power pattern generated by the power pattern generation apparatus 100 may be used to estimate the lifespan of the ESS 20.

The power pattern generation apparatus 100 may include an input unit 110, a memory 120, a processor 130, and an output unit 140. A user 30 may input a factor value required for the power pattern generation apparatus 100 to generate a power pattern to the input unit 110 of the power pattern generation apparatus 100. According to an embodiment, the user 30 may input factor values of a system energy (unit: [Wh]), a maximum C-rate (Max C-rate), an equivalent cycle, a time step (unit: [s]) of a unit charge/discharge operation, a reference value of a depth of discharge (DoD) (unit: [%]), and/or a reference iteration count of the ESS 20 to the input unit 110 of the power pattern generation apparatus 100.

According to an embodiment, the system energy factor value may mean energy stored in the ESS 20.

The maximum C-rate factor value may mean a maximum power charged or discharged in the ESS 20.

The equivalent cycle factor value may mean a ratio of the system energy to energy used in the ESS 20. For example, when total energy used is 150 Wh for energy of 100 Wh of the ESS 20, the equivalent cycle factor value may be calculated as 1.5.

The time step factor value of the unit charge/discharge operation may mean a time required for the ESS 20 to charge or discharge a power once.

The reference value of the DoD may mean a DoD of the ESS 20 required by the user 30.

The reference iteration count factor value may mean the number of times the power pattern generation method is iterated in the same or similar condition so as to generate a power pattern of the ESS 20 in a range input to the power pattern generation apparatus 100 from the user 30.

The memory 120 may store a factor value input to the ESS 20. The memory 120 of the power pattern generation apparatus 100 may store at least one commands for generating virtual power charge pattern and power discharge pattern of the ESS 20.

The processor 130 may execute one or more commands stored in the memory 120 by using the factor value stored in the memory 120. The processor 130 may mean a dedicated processor (e.g., an embedded processor) for performing each operation or a generic-purpose processor (such as a CPU or an application processor) that may perform corresponding operations by executing one or more software program stored in a memory device.

The output unit 140 may output the virtual power charge pattern and power discharge pattern of the ESS 20 generated according to an embodiment disclosed herein.

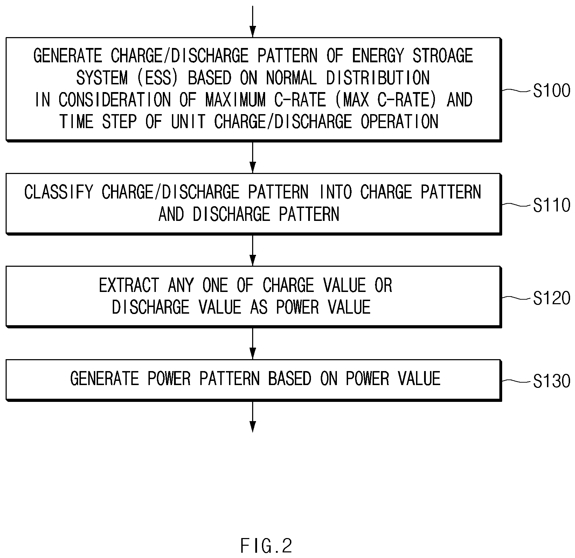

A detailed operation of the power pattern generation apparatus 100 will be described in more detail with reference to FIGS. 2 to 5 below.

FIG. 2 is a flowchart showing a power pattern generation method according to an embodiment disclosed herein.

Referring to FIG. 2, an operating method of a power pattern generation apparatus according to an embodiment disclosed herein may include operation S100 of generating a charge/discharge pattern of the ESS 20 based on a normal distribution in consideration of a maximum C-rate and a time step of a unit charge/discharge operation, operation S 110 of classifying the charge/discharge pattern into a charge pattern of the power and a discharge pattern of the power, operation S 120 of extracting any one of a charge value or a discharge value as a power value, and operation S 130 of generating a power pattern based on the power value.

Hereinbelow, operations S100 through S 130 will be described in detail with reference to FIG. 1.

In operation S 100, the processor 130 may generate the charge/discharge pattern of the ESS 20. According to an embodiment, the charge/discharge pattern of the ESS 20 may include a discrete value. The processor 130 may generate the charge/discharge pattern based on a normal distribution. According to an embodiment, the processor 130 may generate the charge/discharge pattern by using a normal distribution random number generation function of a python program. According to an embodiment, the processor 130 may generate the charge/discharge pattern based on a normal distribution having a mean of 0. Values constituting the charge/discharge pattern (that is, a y-axis value on the normal distribution) each may mean the amount of a charge power or a discharge power of the ESS 20. The processor 130 may multiply the maximum C-rate input from the user 30 to each value of the generated charge/discharge pattern. The number of discrete values constituting the charge/discharge pattern may be equal to the number of times of power charge and power discharge per day. That is, the charge/discharge pattern of the ESS 20 may include the same number of discrete values as an operation result of [Equation 1].

[Equation 1]

$$\text{Number of Discrete Values Constituting Daily Charge/Discharge Pattern} = \frac{86{,}400\ [s]}{Time\ Step\ of\ Unit\ Charge/Discharge\ Operation\ [s]}$$

In operation S110, the processor 130 may classify the charge/discharge pattern based on the normal distribution generated in operation S100 into a power charge pattern and a power discharge pattern. The processor 130 may classify the charge/discharge pattern based on the normal distribution into the power charge pattern and the power discharge pattern by bisecting the normal distribution with respect to an x-axis on the normal distribution. According to an embodiment disclosed herein, when the processor 130 generates the charge/discharge pattern based on the normal distribution having a mean of 0, the processor 130 may classify, out of the charge/discharge pattern, a pattern at $x \geq 0$ on the normal distribution as the charge pattern and a pattern at $x < 0$ on the normal distribution as the discharge pattern. A value classified as the charge pattern by the processor 130 may mean a power value stored in the ESS 20, and a value classified as the discharge pattern by the processor 130 may mean a power value discharged from the ESS 20. The processor 130 may convert the value classified as the discharge pattern into a negative value.

In operation S120, the processor 130 may extract a power value for generating a virtual charge/discharge pattern of the ESS. The processor 130 may select any one of a charge value of the charge pattern or a discharge value of the discharge pattern and extract the same as the power value. The processor 130 may extract the power value based on a first value for generating the virtual charge/discharge pattern. According to an embodiment, the processor 130 may generate a group G = f 1, 2} of a random number and select the first value from the group G. In this case, the processor 130 may extract the charge value from the charge pattern as the power value when the first value is 1, and extract the discharge value from the discharge pattern as the power value when the first value is 2.

In operation S130, the processor 130 may generate the virtual power pattern of the ESS 20 based on the extracted power value. The processor 130 may repeat operation S 120 of extracting any one of the charge value or the discharge value and arrange the power value extracted in operation S 120 in order. At this time, the power value arranged in order may be the virtual power pattern of the ESS 20. Before repeating operation S 120 of extracting the power value, the processor 130 may remove a previously extracted power value from the charge pattern or the discharge pattern. The processor 130 may prevent the same power value as a charge value previously extracted from the charge pattern or a discharge value previously extracted from the discharge pattern from being extracted, by removing the previously extracted power value from the charge pattern or the discharge pattern.

The processor 130 may generate the virtual power pattern that alternately performs the charge operation and the discharge operation of the power at random, through operations S120 and S 130. The virtual power pattern of the ESS 20 generated according to an embodiment disclosed herein may be output through the output unit 140.

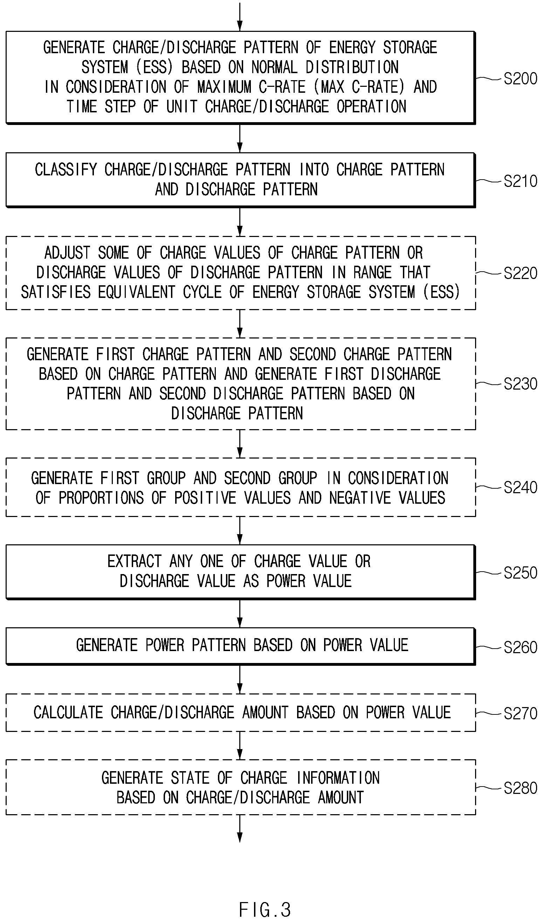

FIG. 3 is a flowchart showing in detail a power pattern generation method according to an embodiment disclosed herein.

Referring to FIG. 3, an operating method of a power pattern generation apparatus according to an embodiment disclosed herein may include operation S200 of generating a charge/discharge pattern of the ESS 20 based on a normal distribution in consideration of a maximum C-rate and a time step of a unit charge/discharge operation, operation S210 of classifying the charge/discharge pattern into a charge pattern of a power and a discharge pattern of a power, operation S220 of controlling some of charge values of the charge pattern or some of discharge values of the discharge pattern in a range that satisfies an equivalent cycle of the ESS 20, operation S230 of generating a first charge pattern and a second charge pattern based on the charge pattern and generating a first discharge pattern and a second discharge pattern based on the discharge pattern, operation S240 of generating a first group and a second group by considering proportions of positive values and negative values, operation S250 of extracting a power value from any one of the first charge pattern, the second charge pattern, the first discharge pattern, and the second discharge pattern, operation S260 of generating a power pattern based on the power value, operation S270 of calculating a charge/discharge amount based on the power value, and/or operation S280 of generating remaining capacity information based on the charge/discharge amount.

Hereinbelow, operations S200 through S280 will be described in detail with reference to FIGS. 1 and 2.

Operation S200 may be substantially the same as operation S 100 of FIG. 2.

Operation S210 may be substantially the same as operation S110 of FIG. 2.

In operation S220, the processor 130 may adjust some of charge values of the charge pattern and/or some of discharge values of the discharge pattern. According to an embodiment, the processor 130 may perform adjustment to reduce some of the charge values of the charge pattern and/or some of the discharge values of the discharge pattern. According to the current embodiment, the power pattern generation apparatus 100 may prevent a power pattern for excessively charging or discharging a power from being generated, by performing adjustment to reduce some of the charge values and/or some of the discharge values in operation S220.

The processor 130 may adjust some of the charge values of the charge pattern and/or some of the discharge values of the discharge pattern within a limit that satisfies a range of an equivalent cycle input from the user 30. The range of the equivalent cycle input from the user 30 may mean a range in which an equivalent cycle of charge and/or an equivalent cycle of discharge each exceeds an equivalent cycle factor value input from the user 30. The processor 130 may determine whether the equivalent cycle of charge and/or the equivalent cycle of discharge satisfies the range of the equivalent cycle input from the user 30. A method of calculating, by the processor 130, the equivalent cycle of charge and/or the equivalent cycle of discharge according to an embodiment disclosed herein will be described in detail.

The processor 130 may calculate charge energy and/or discharge energy. The processor 130 may perform calculation to convert a charge value included in the charge pattern into charge energy and perform calculation to convert a discharge value included in the discharge pattern into discharge energy. The processor 130 may refer to Equation 2 to calculate the charge energy and/or the discharge energy.

[Equation 2]

Charge Energy or Discharge Energy [Wh]

$$= \text{(Charge Value or Discharge Value [W])} \times \frac{Time\ Step\ of\ Unit\ Charge/Discharge\ Operation\ [s]}{3{,}600\ [s]}$$

The processor 130 may calculate the equivalent cycle of charge and/or the equivalent cycle of discharge. The processor 130 may calculate the equivalent cycle of charge based on the charge energy and calculate the equivalent cycle of discharge based on the discharge energy. The processor 130 may refer to Equation 3 below to calculate the equivalent cycle of charge and/or the equivalent cycle of discharge. According to an embodiment, the processor 130 may set an initial value of the equivalent cycle of charge and the equivalent cycle of discharge to 0.

[Equation 3]

(1)

Equivalent Cycle of Charge = Equivalent Cycle of Charge + (Charge Energy $\div$ System Energy)

(2)

Equivalent Cycle of Discharge = Equivalent Cycle of Discharge + (Discharge Energy $\div$ System Energy)

In operation S230, the processor 130 may classify some of the charge values included in the charge pattern as a first charge pattern and the other charge values as a second charge pattern. In operation S220, the processor 130 may set a criterion for classifying the charge pattern into the first charge pattern and the second charge pattern and a criterion for classifying the discharge pattern as the first discharge pattern and the second discharge pattern to be the same as each other. According to an embodiment, the processor 130 may classify the charge values such that the number of charge values included in the first charge pattern and the number of charge values included in the second charge pattern are equal to each other, in operation S220. For example, the processor 130 may divide the charge pattern into two patterns to classify one pattern as the first charge pattern and classify the other pattern as the second charge pattern. The processor 130 may perform operation S230 simultaneously with operation S210 or S220 or after operation S220. The processor 130 may extract the charge value of the first charge pattern, the charge value of the second charge pattern, the discharge value of the first discharge pattern, or the discharge value of the second discharge pattern, classified in operation S230, at random. The processor 130 may generate a virtual power pattern that is similar to an actual power pattern of the ESS 20 by extracting the divided charge pattern and discharge pattern at random in operation S230. A detailed method of extracting, by the processor 130, the divided charge pattern and discharge pattern at random in operation S230 may refer to a description of operation S250.

In operation S240, the processor 130 may generate a first group and a second group in consideration of proportions of positive values and negative values. According to an embodiment, the processor 130 may generate the first group and the second group including positive values and negative values in equal proportions. For example, the processor 130 may generate the first group and the second group to be the same as {-1000, -999, -998, ..., 998, 999, 1000}. The proportions of the positive values and the negative values included in the first group and the second group generated by the processor 130 are not necessarily fixed to be the same as each other. According to an embodiment, the processor 130 may adjust the proportions of the positive values and the negative values included in the first group and/or the second group. The processor 130 may perform operation S240 simultaneously with or after operation S200, S210, S220, or S230.

Operation S250 may be substantially the same as operation S120 of FIG. 2. In operation S250, the processor 130 may extract a power value for generating a virtual charge/discharge pattern of the ESS 20. According to an embodiment, the processor 130 may extract any one of the charge value of the first charge pattern, the charge value of the second charge pattern, the discharge value of the first discharge pattern, and the discharge value of the second discharge pattern as a power value. The processor 130 may extract the power value based on a first value and a second value for generating the virtual charge/discharge pattern. The processor 130 may select the second value based on the first value. The processor 130 may perform operation S250 after operation S230 or S240 or simultaneously with operation S240.

According to an embodiment, the processor 130 may select the first value from a group of random numbers G = {1, 2}, and select the second value from a group of random numbers E = {11, 12} or a group of random numbers F = {21, 22}. According to an embodiment, the processor 130 may select the second value from the group E when the first value is 1, and from the group F when the first value is 2. According to an embodiment, the processor 130 may extract the power value from the first charge pattern when the second value is 11, from the first discharge pattern (or the second discharge pattern) when the second value is 12, from the second charge pattern when the second value is 21, and from the second discharge pattern (or the first discharge pattern) when the second value is 22.

According to another embodiment, the processor 130 may select the first value from a group of random numbers G = {1, 2}, and select the second value from the first group or the second group generated in operation S240. According to an embodiment, the processor 130 may select the second value from the first group when the first value is 1, and from the second group when the first value is 2. According to an embodiment, the processor 130 may extract the power value from the first charge pattern when the first value is 1 and the second value is 0 or a positive value, from the first discharge pattern (or the second discharge pattern) when the first value is 1 and the second value is a negative value, from the second charge pattern when the first value is 2 and the second value is 0 or a positive value, and from the second discharge pattern (or the first discharge pattern) when the first value is 2 and the second value is a negative value.

Operation S260 may be substantially the same as operation S130 of FIG. 2. The processor 130 may repeat operation S250 of extracting any one of the charge value or the discharge value and arrange the power value extracted in operation S250 in order. At this time, the power value arranged in order may be the virtual power pattern of the ESS 20. Before repeating operation S250 of extracting the power value, the processor 130 may remove a previously extracted power from the first charge pattern, the second charge pattern, the first discharge pattern, or the second discharge pattern. The processor 130 may prevent the same power value as the previously extracted charge value or discharge value from being extracted, by removing the previously extracted power value from the first charge pattern, the second charge pattern, the first discharge pattern, or the second discharge pattern.

In operation S270, the processor 130 may calculate the amount of charge/discharge by referring to [Equation 4] for the power value extracted in operation S250. The processor 130 may perform operation S270 after or simultaneously with operation S250 or S260.

[Equation 4]

$$\text{Charge/Discharge} \quad \text{Amount} \quad = \quad \text{Power} \quad \text{Value} \quad \times$$

$$\frac{Time\ Step\ of\ Unit\ Charge/Discharge\ Operation}{3,600} \div System\ Energy \times 100$$

In operation S280, the processor 130 may generate remaining capacity (a state of charge (SoC), unit: [%]) information by referring [Equation 5] for the amount of charge/discharge calculated in operation S270. The processor 130 may preset an initial remaining capacity of the ESS 20 to a particular value. For example, the processor 130 may set the initial remaining capacity of the ESS 20 to 50%. The processor 130 may perform operation S280 after or simultaneously with operation S270.

[Equation 5]

State of Charge (SoC) = Existing SoC + Charge/Discharge Amount

The processor 130 may generate a virtual remaining capacity graph of the ESS 20 based on the remaining capacity information. The power pattern generation apparatus 100 may output the virtual remaining capacity information of the ESS 20, generated according to an embodiment of the present document through the output unit 140.

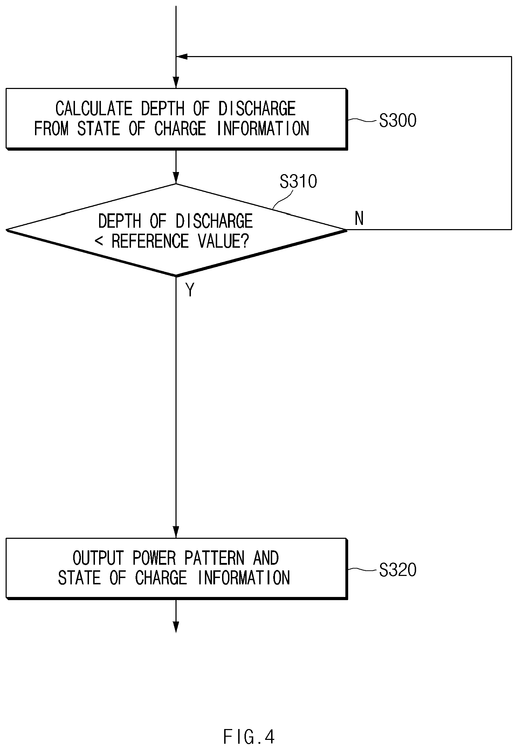

FIG. 4 is a flowchart showing a power pattern generation method according to an embodiment disclosed herein.
Referring to FIG. 4, a method of generating, by the power pattern generation apparatus 100, a power pattern of the ESS 20 may include operation S300 of calculating, by the processor 130, a DoD from the remaining capacity information, operation S310 of determining whether the calculated DoD value is less than a reference value of the DoD required by the user 30, and/or operation S320 of outputting the power pattern and the remaining capacity information.
Hereinbelow, operations S300 through S320 will be described in detail with reference to FIGS. 1 to 3.
In operation S300, the processor 130 may calculate a DoD from the remaining capacity information. The processor 130 may perform operation S300 after or simultaneously with operation S280 of FIG. 3. The processor 130 may calculate the DoD of the virtual pattern by referring to [Equation 6].

[Equation 6]

Depth of Discharge (DoD) = Maximum Value of SoC – Minimum Value of

SoC

In operation S310, the processor 130 may determine whether the DoD of the generated power pattern satisfies a range required by the user 30. The processor 130 may determine whether the DoD calculated in operation S300 is less than the reference value of the DoD, input from the user 30. When the DoD calculated in operation S300 is greater than or equal to the reference value of the DoD, input from the user 30, the processor 130 may determine that the DoD of the generated power pattern does not satisfy the range required by the user 30. According to an embodiment, the processor 130 may re-generate the power pattern when determining that the DoD of the generated power pattern does not satisfy the range required by the user 30. To re-generate the power pattern, the processor 130 may repeat operation S 120 or S250 of extracting the power value, operation S130 or S260 of generating the power pattern based on the power value, operation S270 of calculating the amount of charge/discharge based on the power value, and operation S280 of generating the remaining capacity information based on the amount of charge/discharge. The processor 130 performs operation S120 or S250 of extracting the power value based on the random first value and/or second value, such that a DoD of a power pattern re-generated in the same condition may satisfy the range required by the user 30.
In operation S320, the output unit 140 may output the power pattern and the remaining capacity information, generated by the processor 130. The output unit 140 may perform operation S320 when determining that the DoD of the generated power pattern satisfies the range required by the user 30 in operation S310.

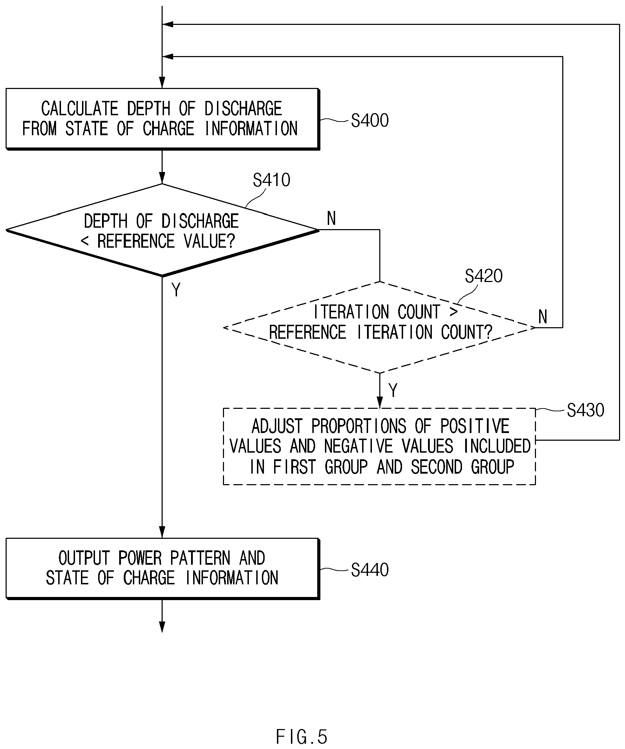

FIG. 5 is a flowchart showing a power pattern generation method according to an embodiment disclosed herein.
Referring to FIG. 5, a method of generating, by the power pattern generation apparatus 100, a power pattern of the ESS 20 may include operation S400 of calculating, by the processor 130, a DoD from the remaining capacity information, operation S410 of determining whether the calculated DoD value is less than the reference value of the DoD required by the user 30, operation S420 of determining whether an iteration count of generation of the power pattern exceeds a reference iteration count required by the user 30, operation S430 of adjusting the proportions of the positive values and the negative values included in the first group and the second group, and/or operation S440 of outputting the power pattern and the remaining capacity information.

Hereinbelow, operations S400 through S440 will be described in detail with reference to FIGS. 1 and 4.

Operation S400 may be substantially the same as operation S300 of FIG. 4.

Operation S410 may be substantially the same as operation S310 of FIG. 4. When the processor 130 re-generates the power pattern in operation S410, the processor 130 may count the number of times generation of the power pattern is iterated.

In operation S420, the processor 130 may determine whether the iteration count satisfies the range required by the user 30. The processor 130 may determine whether the iteration count exceeds the reference iteration count input from the user 30. When the iteration count is less than or equal to the reference iteration count, the processor 130 may determine that the iteration count does not satisfy the range required by the user 30. According to an embodiment, when determining that the iteration count does not satisfy the range required by the user 30, the processor 130 may repeat operation S120 or S250 of extracting the power value, operation S130 or S260 of generating the power pattern based on the power value, operation S270 of calculating the amount of charge/discharge based on the power value, and operation S280 of generating the remaining capacity information based on the amount of charge/discharge, in a condition that is the same as or similar to the existing condition. The similar condition may mean a case where another condition is changed without adjusting, by the processor 130, the proportions of the positive values and the negative values included in the first group and the second group.

In operation S430, the processor 130 may adjust the proportions of the positive values and the negative values included in the first group and the second group. The processor 130 may perform operation S430 when determining that the iteration count of generation of the power pattern satisfies the range required by the user 30 in operation S420. The processor 130 may differently adjust the proportions of the positive values and the negative values included in the first group and the second group. According to an embodiment, the processor 130 may adjust the first group to increase the proportion of the positive values included in the first group and adjust the second group to increase the proportion of the negative values included in the second group. According to an embodiment, the processor 130 may increase all numbers included in the first group by 1 and reduce all numbers included in the second group by 1. According to a detailed embodiment, when the first group and the second group are {-1000, -999, -998, ..., 998, 999, 1000}, the processor 130 may adjust the first group to {-999, -998, -997, ..., 999, 1000, 1001} and adjust the second group to {-1001, -1000, -999, ..., 997, 998, 999} in operation S430. After performing operation S430, the processor 130 may repeat operation S120 or S250 of extracting the power value, operation S130 or S260 of generating the power pattern based on the power value, operation S270 of calculating the amount of charge/discharge based on the power value, and operation S280 of generating the remaining capacity information based on the amount of charge/discharge. When repeating operation S250, the processor 130 may extract the power value based on the first group and the second group in which the proportions of the positive values and the negative values are adjusted, such that the re-generated power pattern may change the proportions of the power charge pattern and the power discharge pattern constituting the power pattern per unit time.

Operation S440 may be substantially the same as operation S320 of FIG. 4.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

The above description is merely illustrative of the technical idea of the present disclosure, and various modifications and variations will be possible without departing from the essential characteristics of embodiments of the present disclosure by those of ordinary skill in the art to which the embodiments disclosed herein pertains. Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present document.

**Claims**

1. A power pattern generation method comprising:

   generating a charge/discharge pattern of an energy storage system (ESS) based on a normal distribution in consideration of a maximum c-rate and a time step of a unit charge/discharge operation;
   classifying the charge/discharge pattern into a charge pattern and a discharge pattern;
   extracting a power value from the charge pattern or the discharge pattern based on a random first value for generating a virtual charge/discharge pattern of the ESS; and
   generating a power pattern based on the power value.

2. The power pattern generation method of claim 1, further comprising adjusting some of charge values of the charge pattern or discharge values of the discharge pattern in a range that satisfies an equivalent cycle of the ESS.

3. The power pattern generation method of claim 1, further comprising:

   calculating a charge/discharge amount based on the power value; and
   generating state of charge (SoC) information based on the charge/discharge amount.

4. The power pattern generation method of claim 3, further comprising generating a first charge pattern and a second charge pattern based on the charge pattern and generating a first discharge pattern and a second discharge pattern based on the discharge pattern,
   wherein the extracting of the power value comprises extracting the power value from any one of the first charge pattern, the second charge pattern, the first discharge pattern, and the second discharge pattern, based on the first value and a random second value for generating the virtual charge/discharge pattern of the ESS.

5. The power pattern generation method of claim 4, further comprising generating a first group and a second group in consideration of proportions of positive values and negative values,
   wherein the second value is selected from the first group or the second group.

6. The power pattern generation method of claim 5, further comprising:

   when a depth of discharge obtained from the SoC information is equal to or greater than a reference value, extracting the power value based on the first value and the second value;
   generating the power pattern based on the power value;
   calculating the charge/discharge amount based on the power value; and
   repeating the generating of the SoC information based on the charge/discharge amount.

7. The power pattern generation method of claim 6, further comprising, when the depth of discharge obtained from the SoC information is equal to or greater than the reference value and the repeating is performed over a reference iteration count, adjusting the proportions of the positive values and the negative values included in the first group and the second group.

8. A power pattern generation apparatus comprising:

   a memory configured to store at least one command;
   a processor configured to execute the at least one command stored in the memory; and
   an output unit configured to output a result of the execution of the processor,
   wherein the processor is further configured to:

      generate a charge/discharge pattern of an energy storage system (ESS) based on a normal distribution in consideration of a maximum c-rate and a time step of a unit charge/discharge operation;
      classify the charge/discharge pattern into a charge pattern and a discharge pattern;
      extract a power value from the charge pattern or the discharge pattern based on a random first value for generate a virtual charge/discharge pattern of the ESS; and
      generate a power pattern based on the power value.

9. The power pattern generation apparatus of claim 8, wherein the processor is further configured to adjust some of charge values of the charge pattern or discharge values of the discharge pattern in a range that satisfies an equivalent cycle of the ESS.

10. The power pattern generation apparatus of claim 8, wherein the processor is further configured to calculate a charge/discharge amount based on the power value and generate state of charge (SoC) information based on the charge/discharge amount.

11. The power pattern generation apparatus of claim 10, wherein the processor is further configured to generate a first charge pattern and a second charge pattern based on the charge pattern and generating a first discharge pattern and a second discharge pattern based on the discharge pattern,
wherein the extraction of the power value by the processor comprises extracting the power value from any one of the first charge pattern, the second charge pattern, the first discharge pattern, and the second discharge pattern, based on the first value and a random second value for generating the virtual charge/discharge pattern of the ESS.

12. The power pattern generation apparatus of claim 11, wherein the processor is further configured to generate a first group and a second group in consideration of proportions of positive values and negative values,
and the second value is selected from the first group or the second group.

13. The power pattern generation apparatus of claim 12, wherein the processor is further configured to:

when a depth of discharge obtained from the SoC information is equal to or greater than a reference value, extract the power value based on the first value and the second value;
generate the power pattern based on the power value;
calculate the charge/discharge amount based on the power value; and
repeat the generating of the SoC information based on the charge/discharge amount.

14. The power pattern generation apparatus of claim 13, wherein the processor is further configured to, when the depth of discharge obtained from the SoC information is equal to or greater than the reference value and the repeating is performed over a reference iteration count, adjust the proportions of the positive values and the negative values included in the first group and the second group.

POWER GENERATION SYSTEM (10)

ENERGY STORAGE SYSTEM (ESS) (20)

POWER PATTERN GENERATION APPARATUS (100)

INPUT UNIT (110)

MEMORY (120)

PROCESSOR (130)

OUTPUT UNIT (140)

USER (30)

FIG.1

```
                          │
                          ▼
┌─────────────────────────────────────────────────┐
│  GENERATE CHARGE/DISCHARGE PATTERN OF ENERGY     │
│         STROAGE SYSTEM (ESS) BASED ON            │──S100
│      NORMAL DISTRIBUTION IN CONSIDERATION OF     │
│   MAXIMUM C-RATE (MAX C-RATE) AND TIME STEP OF   │
│        UNIT CHARGE/DISCHARGE OPERATION           │
└─────────────────────────────────────────────────┘
                          │
                          ▼
┌─────────────────────────────────────────────────┐
│  CLASSIFY CHARGE/DISCHARGE PATTERN INTO CHARGE   │──S110
│       PATTERN AND DISCHARGE PATTERN              │
└─────────────────────────────────────────────────┘
                          │
                          ▼
┌─────────────────────────────────────────────────┐
│      EXTRACT ANY ONE OF CHARGE VALUE OR          │──S120
│      DISCHARGE VALUE AS POWER VALUE              │
└─────────────────────────────────────────────────┘
                          │
                          ▼
┌─────────────────────────────────────────────────┐
│   GENERATE POWER PATTERN BASED ON POWER VALUE    │──S130
└─────────────────────────────────────────────────┘
                          │
                          ▼
```

FIG.2

GENERATE CHARGE/DISCHARGE PATTERN OF ENERGY STORAGE
SYSTEM (ESS) BASED ON NORMAL DISTRIBUTION
IN CONSIDERATION OF MAXIMUM C-RATE (MAX C-RATE) AND
TIME STEP OF UNIT CHARGE/DISCHARGE OPERATION ～S200

CLASSIFY CHARGE/DISCHARGE PATTERN INTO CHARGE PATTERN
AND DISCHARGE PATTERN ～S210

ADJUST SOME OF CHARGE VALUES OF CHARGE PATTERN OR
DISCHARGE VALUES OF DISCHARGE PATTERN IN RANGE THAT
SATISFIES EQUIVALENT CYCLE OF ENERGY STORAGE SYSTEM (ESS) ～S220

GENERATE FIRST CHARGE PATTERN AND SECOND CHARGE PATTERN
BASED ON CHARGE PATTERN AND GENERATE FIRST DISCHARGE
PATTERN AND SECOND DISCHARGE PATTERN BASED ON
DISCHARGE PATTERN ～S230

GENERATE FIRST GROUP AND SECOND GROUP IN CONSIDERATION
OF PROPORTIONS OF POSITIVE VALUES AND NEGATIVE VALUES ～S240

EXTRACT ANY ONE OF CHARGE VALUE OR
DISCHARGE VALUE AS POWER VALUE ～S250

GENERATE POWER PATTERN BASED ON POWER VALUE ～S260

CALCULATE CHARGE/DISCHARGE AMOUNT BASED ON POWER VALUE ～S270

GENERATE STATE OF CHARGE INFORMATION
BASED ON CHARGE/DISCHARGE AMOUNT ～S280

FIG.3

CALCULATE DEPTH OF DISCHARGE
FROM STATE OF CHARGE INFORMATION — S300

DEPTH OF DISCHARGE
< REFERENCE VALUE? S310

N

Y

OUTPUT POWER PATTERN AND
STATE OF CHARGE INFORMATION — S320

FIG.4

CALCULATE DEPTH OF DISCHARGE
FROM STATE OF CHARGE INFORMATION — S400

DEPTH OF DISCHARGE
< REFERENCE VALUE? — S410

N

Y

ITERATION COUNT >
REFERENCE ITERATION COUNT? — S420

N

Y

ADJUST PROPORTIONS OF POSITIVE
VALUES AND NEGATIVE VALUES INCLUDED
IN FIRST GROUP AND SECOND GROUP — S430

OUTPUT POWER PATTERN AND
STATE OF CHARGE INFORMATION — S440

FIG.5

## INTERNATIONAL SEARCH REPORT

| International application No. |
|---|
| **PCT/KR2022/013855** |

### A. CLASSIFICATION OF SUBJECT MATTER

**H02J 3/32**(2006.01)i; **H02J 7/00**(2006.01)i

According to International Patent Classification (IPC) or to both national classification and IPC

### B. FIELDS SEARCHED

Minimum documentation searched (classification system followed by classification symbols)

H02J 3/32(2006.01); F03D 9/00(2006.01); H01M 10/44(2006.01); H01M 10/48(2006.01); H02J 3/28(2006.01); H02J 7/00(2006.01); H02J 7/34(2006.01); H02J 7/35(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력(power), 패턴(pattern), 충전(charging), 방전(discharging), 정규분포(normal distribution)

### C. DOCUMENTS CONSIDERED TO BE RELEVANT

| Category* | Citation of document, with indication, where appropriate, of the relevant passages | Relevant to claim No. |
|---|---|---|
| A | KR 10-2016-0028341 A (SAMSUNG SDI CO., LTD.) 11 March 2016 (2016-03-11)<br>See paragraphs [0121]-[0134]; claim 7; and figures 2-5. | 1-14 |
| A | JP 2013-106476 A (TOSHIBA CORP.) 30 May 2013 (2013-05-30)<br>See paragraphs [0022]-[0023]; claims 1-2; and figure 1. | 1-14 |
| A | JP 2012-029451 A (NICHICON CORP. et al.) 09 February 2012 (2012-02-09)<br>See paragraphs [0043]-[0061]; and figures 1-4. | 1-14 |
| A | WO 2019-150814 A1 (KYOCERA CORPORATION et al.) 08 August 2019 (2019-08-08)<br>See entire document. | 1-14 |
| A | US 8575886 B2 (OOHARA, Shinya et al.) 05 November 2013 (2013-11-05)<br>See entire document. | 1-14 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 December 2022** | **22 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2022/013855**

| Patent document cited in search report | | | Publication date (day/month/year) | Patent family member(s) | | | Publication date (day/month/year) |
|---|---|---|---|---|---|---|---|
| KR | 10-2016-0028341 | A | 11 March 2016 | CN | 105391110 | A | 09 March 2016 |
| | | | | CN | 105391110 | B | 14 February 2020 |
| | | | | JP | 2016-054607 | A | 14 April 2016 |
| | | | | JP | 6386308 | B2 | 05 September 2018 |
| | | | | KR | 10-2403232 | B1 | 26 May 2022 |
| | | | | US | 2016-0064970 | A1 | 03 March 2016 |
| | | | | US | 9768642 | B2 | 19 September 2017 |
| JP | 2013-106476 | A | 30 May 2013 | JP | 5739788 | B2 | 24 June 2015 |
| | | | | US | 2013-0119939 | A1 | 16 May 2013 |
| | | | | US | 9093844 | B2 | 28 July 2015 |
| JP | 2012-029451 | A | 09 February 2012 | JP | 5467010 | B2 | 09 April 2014 |
| WO | 2019-150814 | A1 | 08 August 2019 | EP | 3748799 | A1 | 09 December 2020 |
| | | | | EP | 3748799 | A4 | 27 October 2021 |
| | | | | JP | 7072588 | B2 | 20 May 2022 |
| | | | | US | 11362516 | B2 | 14 June 2022 |
| | | | | US | 2021-0050726 | A1 | 18 February 2021 |
| US | 8575886 | B2 | 05 November 2013 | CN | 102084570 | A | 01 June 2011 |
| | | | | CN | 102084570 | B | 16 October 2013 |
| | | | | EP | 2367256 | A2 | 21 September 2011 |
| | | | | EP | 2367256 | A3 | 26 March 2014 |
| | | | | EP | 2367256 | B1 | 27 January 2016 |
| | | | | JP | 5042369 | B2 | 03 October 2012 |
| | | | | KR | 10-1183751 | B1 | 17 September 2012 |
| | | | | KR | 10-2011-0039210 | A | 15 April 2011 |
| | | | | TW | 201117511 | A | 16 May 2011 |
| | | | | TW | I449294 | B | 11 August 2014 |
| | | | | US | 2011-0193516 | A1 | 11 August 2011 |
| | | | | WO | 2011-030380 | A1 | 17 March 2011 |

**REFERENCES CITED IN THE DESCRIPTION**

**Patent documents cited in the description**

- KR 1020210150947